# EUROPEAN PATENT SPECIFICATION

(11) **EP 4 597 782 B1**
(45) Date of publication and mention of the grant of the patent: **07.10.2026**
(21) Application number: 25153662.9
(22) Date of filing: 23.01.2025
(51) Int. Cl.: H02J 3/38, H02J 3/46, H02S 50/10

(54) **PHOTOVOLTAIC SYSTEM AND METHOD FOR OPERATING SAME**
PHOTOVOLTAIKANLAGE UND VERFAHREN ZUM BETREIBEN EINER SOLCHEN
SYSTÈME PHOTOVOLTAÏQUE ET SON PROCÉDÉ DE FONCTIONNEMENT

(30) Priority: 05.02.2024 CN 202410166883
(43) Date of publication of application: 06.08.2025
(73) Proprietor: Anker Innovations Technology Co., Ltd., Changsha, Hunan 410000 (CN)
(72) Inventor: CHEN, Wei, Shenzhen (CN); LI, Yiyong, Shenzhen (CN); LUO, Fei, Shenzhen (CN)
(74) Representative: Steffens, Adrian

(56) References cited:
- US-A1- 2016 329 715
- US-A1- 2017 373 201
- US-A1- 2019 027 617

## Description

### Field

The present disclosure relates to the technical field of photovoltaics, particularly to a photovoltaic system and a method for operating the same.

### Background

With development of new energy technologies and proposal of energy conservation and emission reduction, photovoltaic power generation has been widely applied due to its advantages such as being clean and pollution-free, having a short construction period, a long service life, and low maintenance cost. In photovoltaic power generation technology, photovoltaic panels typically get access to an AC grid via micro photovoltaic grid-tied inverters to supply power to the AC grid.

However, in related art, specifications of the photovoltaic panels are not known for micro photovoltaic grid-tied inverters, resulting in poor access reliability of the photovoltaic panels.

US 2016/329715 A1 discloses photovoltaic power system inverter detection apparatus and methods.

US 2017/373201 A1 discloses: The present disclosure is directed to a safety device for photovoltaic installations. The safety device includes a first terminal adapted to connect to a first output terminal of a solar panel, a second terminal adapted to connect to a second output terminal of the solar panel, a first switching module connected between the first terminal and the second terminal. The first switching module comprising a first switch and a first impedance connected in series. The first impedance includes one terminal connected to the first terminal and the first switch includes one terminal connected to the second terminal. A control module is adapted to read a control signal and drive the operation of the first switch based on the read value of the control signal. A power supply means is adapted to supply power to the control module.

US 2019/027617 A1 discloses: A test signal is applied from a continuity test source to a photovoltaic (PV) panel string, to test electrical continuity in the PV panel string and between the PV panel string and an inverter that is coupled to the PV panel string. If the test signal is detected at a PV panel disconnect switch that is separate from the continuity test source and switchably couples one or more Direct Current (DC) PV panels in the PV panel string, then the PV panel disconnect switch is controlled to connect the one or more DC PV panels in the PV panel string. Otherwise, the PV panel disconnect switch is controlled to disconnect the one or more DC PV panels from the PV panel string. The test signal could be, for example, an Alternating Current (AC) signal tuned to a PV installation that includes the PV panel string and the inverter.

### Summary

Based on this, it is necessary to provide a photovoltaic system and a method for operating the same to address an issue of poor access reliability of a photovoltaic panel.

The invention is set out in the appended claims. According to an aspect, a method for operating a photovoltaic system comprises a photovoltaic panel, a switching device, a load device, and a micro-inverter, in which an output end of the photovoltaic panel is connected to a first end of the load device and the micro-inverter, a second end of the load device is connected to a first end of the switching device, and a second end of the switching device is grounded; upon receiving a power supply instruction, an output power parameter and an output electrical parameter ratio of the photovoltaic panel are determined; and a connection status between the photovoltaic panel and the micro-inverter is adjusted based on the output power parameter and the output electrical parameter ratio.

According to another aspect, a photovoltaic system comprises a load device, a micro-inverter, a photovoltaic panel, a voltage collector, a switching device and a controller, in which the micro-inverter is configured to be connected to electrical equipment; an output end of the photovoltaic panel is connected to a first end of the load device and the micro-inverter; the voltage collector is provided at the output end of the photovoltaic panel; a first end of the switching device is connected to a second end of the load device, and a second end of the switching device is grounded; the controller is connected to the voltage collector and a third end of the switching device to implement the steps of the method described above.

In the photovoltaic system and the method for operating the same, a load device and a switching device are connected in series at the output end of the photovoltaic panel. Upon receiving a power supply instruction to start power supply to the electrical equipment, the output power parameter and the output electrical parameter ratio of the photovoltaic panel are determined firstly. Subsequently, the connection status between the photovoltaic panel and the micro-inverter is adjusted in combination with the output power parameter and the output electrical parameter ratio, that is, it is determined whether the micro-inverter gets access to the photovoltaic panel based on the output power parameter and the output electrical parameter ratio. In the above scheme, it can be determined whether to control the photovoltaic panel to access the micro-inverter for operation by analyzing the output of the photovoltaic panel and according to actual output conditions of the photovoltaic panel. Thus, even without knowing specifications of the photovoltaic panel or whether the photovoltaic panel is in daytime or nighttime, access control between the micro-inverter and the photovoltaic panel can still be achieved precisely, thereby effectively improving the access reliability of the photovoltaic panel.

Determining an output power parameter and an output electrical parameter ratio of the photovoltaic panel may comprise at least one of or all of: obtaining a first output voltage of the photovoltaic panel in a case of the switching device being opened; obtaining a second output voltage of the photovoltaic panel in a case of the switching device being closed; and determining the output power parameter and the output electrical parameter ratio based on the first output voltage, the second output voltage, and, preferably, a resistance value of the load device.

The output power parameter may comprise a first power parameter and a second power parameter. Determining the output power parameter and the output electrical parameter ratio based on the first output voltage, the second output voltage, and a resistance value of the load device may comprise at least one of or all of: determining the first power parameter based on the second output voltage and the resistance value of the load device; determining the second power parameter based on the first output voltage, the second output voltage, and the resistance value; and determining the output electrical parameter ratio is based on the second output voltage and the first output voltage.

Adjusting a connection status between the photovoltaic panel and the micro-inverter based on the output power parameter and the output electrical parameter ratio may comprise: controlling the photovoltaic panel to access the micro-inverter for operation in a case, where preferably the output power parameter and the output electrical parameter ratio meet preset parameter conditions and/or the first output voltage and the second output voltage meet preset output conditions.

The output power parameter and/or the output electrical parameter ratio may meet preset parameter conditions, which may preferably comprise at least one of or all of: the first power parameter meeting a first parameter condition, the second power parameter meeting a second parameter condition, and the output electrical parameter ratio meeting a third parameter condition.

The output power parameter and/or the output electrical parameter ratio may meet preset parameter conditions, which may preferably comprise at least one of or all of: the first power parameter being greater than or equal to a first preset power threshold; the second power parameter being less than or equal to a second preset power threshold; and the output electrical parameter ratio being greater than or equal to a preset ratio threshold.

The method may further comprise at least one of or all of the following (preferably before said adjusting a connection status between the photovoltaic panel and the micro-inverter based on the output power parameter and the output electrical parameter ratio): obtaining system minimum power consumption and load minimum power consumption of the photovoltaic system, along with an open-circuit voltage and an operating voltage of the photovoltaic panel; determining a first preset power threshold based on the system minimum power consumption and the load minimum power consumption;
determining a second preset power threshold based on the open-circuit voltage; and determining a preset ratio threshold based on the open-circuit voltage and the operating voltage.

The first output voltage and/or the second output voltage may meet preset output conditions, which may comprise the first output voltage and the second output voltage being within a preset input voltage range.

The method may further comprise at least one of or all of the following (preferably before obtaining a first output voltage of the photovoltaic panel in a case of the switching device being opened): obtaining an output end voltage of the photovoltaic panel; verifying an operating status of the switching device in a case where the output end voltage meets preset operating conditions.

Additionally or alternatively, said controlling the photovoltaic panel to access the micro-inverter for operation may comprise: controlling the switching unit which is separately connected to the photovoltaic panel and the micro-inverter to turn on, the micro-inverter preferably being configured to be connected with electrical equipment.

The method may in particular comprise: before obtaining a first output voltage of the photovoltaic panel in a case of the switching device being opened, the method further comprises: obtaining an output end voltage of the photovoltaic panel; verifying an operating status of the switching device in a case where the output end voltage meets preset operating conditions; said controlling the photovoltaic panel to access the micro-inverter for operation comprises: controlling the switching unit which is separately connected to the photovoltaic panel and the micro-inverter to turn on, the micro-inverter being configured to be connected with electrical equipment.

The first power parameter may be obtained by dividing a square of the second output voltage by the resistance value.

The micro-inverter may be a plug-and-play device. The micro-inverter may be configured to convert direct current (DC) generated by a single solar module to alternating current (AC). The micro-inverter may act as a voltage collector and/or may (dynamically) adjust its operation to harvest a maximum power point (MPP) of the panel, preferably using MPPT (Maximum Power Point Tracking) technology. The voltage collector may be a charge controller, a voltage regulator, or an electronic load or sensor.

### Brief description of the drawings

In order to more clearly illustrate embodiments of the disclosure or technical solutions in the related art, drawings that need to be used in description of the embodiments or the related art are briefly introduced below. It will be apparent to those of ordinary skill in the art that the drawings in the following description only show some embodiments of the disclosure, and other drawings can be obtained from these drawings without inventive work.
- FIG. 1: is a schematic structural diagram of a photovoltaic system in an embodiment of the present disclosure;
- FIG. 2: is a schematic flow diagram of a method for operating the photovoltaic system in an embodiment of the present disclosure;
- FIG. 3: is a schematic flow diagram of analysis of an output power parameter and an output electrical parameter ratio in an embodiment of the present disclosure;
- FIG. 4: is a schematic flow diagram of analysis of a first power parameter, a second power parameter, and an output electrical parameter ratio in an embodiment of the present disclosure;
- FIG. 5: is a schematic flow diagram of a method for operating the photovoltaic system in another embodiment of the present disclosure;
- FIG. 6: is a schematic flow diagram of threshold determination in an embodiment of the present disclosure;
- FIG. 7: is a schematic flow diagram of analysis of an output power parameter and an output electrical parameter ratio in another embodiment of the present disclosure; and
- FIG. 8: is a schematic structural diagram of a photovoltaic system in another embodiment of the present disclosure.

### Detailed description

In order to facilitate understanding of the present disclosure, the present disclosure will be described comprehensively below with reference to the accompanying drawings. Preferred embodiments of the present disclosure are shown in the accompanying drawings. However, the present disclosure may be implemented in many different forms and is not limited to the embodiments described herein. Rather, these embodiments are provided to understand contents of the disclosure thoroughly and comprehensively.

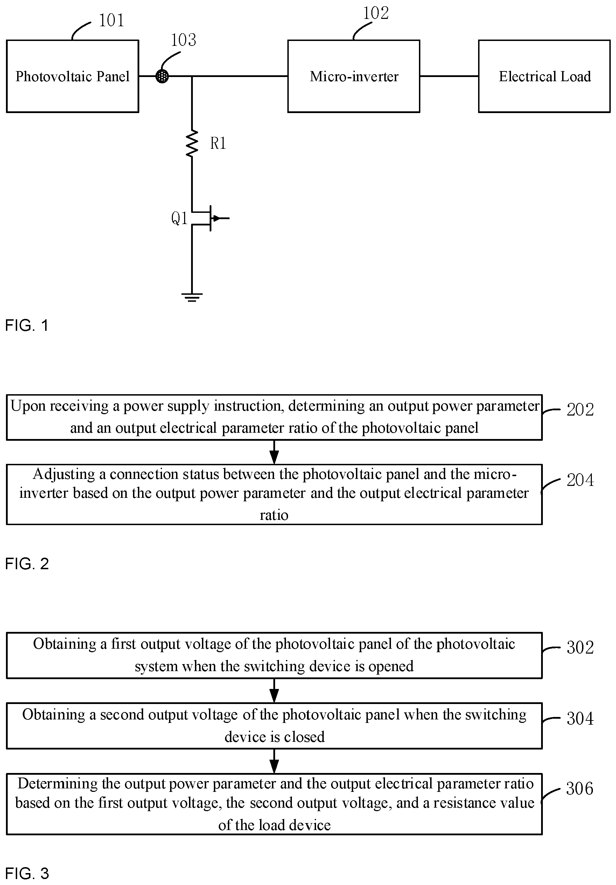

A method for operating a photovoltaic system provided in the embodiments of the present disclosure can be applied in a photovoltaic system, which can specifically refer to FIG. 1. The photovoltaic system includes a photovoltaic panel 101 and a micro-inverter 102. An output end of the photovoltaic panel 101 is connected to the micro-inverter 102 which is connected to electrical equipment. Direct current energy generated by the photovoltaic panel 101 through photoelectric effect is converted by the micro-inverter 102 and supplied to the electrical equipment (e.g., various household load devices) in a form of alternating current. Furthermore, in an embodiment, a voltage collector 103 is provided at the output end of the photovoltaic panel 101. Additionally, a load device R1 and a switching device Q1 are sequentially connected to the output end of the photovoltaic panel 101. When the switching device Q1 is opened, the load device R1 is not accessed to the photovoltaic panel 101, in which case a voltage is not divided between the photovoltaic panel 101 and the load device R1. When the switching device Q1 is closed, the voltage is divided between the photovoltaic panel 101 and the load device R1, causing a certain change in a voltage value at the output end of the photovoltaic panel 101.

A controller of the photovoltaic system is connected to the switching device Q1 and the voltage collector 103, respectively. Through the controller, not only can an on-off status of the switching device Q1 be controlled, but an output of the photovoltaic panel 101 can also be respectively obtained via the voltage collector 103 in a case of the switching device Q1 being either on or off, and thus realizing the method for operating the photovoltaic system provided in the embodiments of the present disclosure.

The present disclosure provides a method for operating a photovoltaic system. The photovoltaic system includes a photovoltaic panel, a switching device, a load device, and a micro-inverter. An output end of the photovoltaic panel is connected to a first end of the load device, a second end of the load device is connected to a first end of the switching device, and a second end of the switching device is grounded. Referring to FIG. 2, the method includes step 202 and step 204.

Step 202: upon receiving a power supply instruction, an output power parameter and an output electrical parameter ratio of the photovoltaic panel are determined.

Specifically, the switching device refers to a device capable of performing a switching function under control of a controller or manual operation by a user. The photovoltaic panel refers to a photoelectric conversion device capable of converting solar or light energy into electric energy. The load device refers to a device capable of functioning as a load to consume the electric energy.

The output power parameter refers to a parameter related to an output power of the photovoltaic panel, which can specifically be an output power value or variation in output power at different output statuses of the photovoltaic panel, which is not specifically limited herein. The output electrical parameter ratio refers to a ratio of electrical parameters collected at the output end of the photovoltaic panel at different output statuses. Specifically, there may be two or more different output statuses of the photovoltaic panel, which can be two statuses of the photovoltaic panel being accessed by the load device and not being accessed by the load device. The output electrical parameter ratio may specifically be a ratio of output voltages.

It can be understood that specific types of the load device and the switching device are not limited and can be selected in connection with actual needs. For example, in a more detailed embodiment, the load device can be a resistor, which may specifically be a single resistor or a resistor assembly formed by multiple resistors connected in series and/or parallel. In another embodiment, the load device can be an energy-consuming device, such as an indicator light. The switching device can be a power switching tube (e.g., a triode or a field-effect transistor) or a relay.

The output end of the photovoltaic panel gets access to the micro-inverter, and supplies power to the electrical equipment through the micro-inverter. Additionally, the switching device and the load device are connected in series at the output end of the photovoltaic panel. In this way, during an operation of the photovoltaic panel, the switching devices are controlled to be opened and connected so that the photovoltaic panel is in different output statuses.

The method provided in the embodiments of the present disclosure essentially involves detecting the output of the photovoltaic panel, so that after the photovoltaic panel gets access to the micro-inverter, it can supply suitable electric energy to the electrical equipment, thereby maintaining a stable operation of the electrical equipment. As a result, the controller needs to monitor operational requirements of the photovoltaic system, and upon detecting a received power supply instruction, that is, when the photovoltaic panel needs to charge or supply power to the electrical equipment, it is considered that the photovoltaic system has an output detection need. At this point, a process of obtaining the output power parameter and the output electrical parameter ratio may be initiated.

Step 204: a connection status between the photovoltaic panel and the micro-inverter is adjusted based on the output power parameter and the output electrical parameter ratio.

Specifically, the connection status between the photovoltaic panel and the micro-inverter refers to two statuses: the micro-inverter being connected with the photovoltaic panel, and the micro-inverter being disconnected from the photovoltaic panel. After the output power parameter and the output electrical parameter ratio are determined, the controller determines whether the micro-inverter can be accessed to the photovoltaic panel based on the output power parameter and the output electrical parameter ratio and according to actual values of the output power parameter and the output electrical parameter ratio.

In the method for operating the photovoltaic system, the load device and the switching device are connected in series at the output end of the photovoltaic panel. Upon receiving the power supply instruction to initiate power supply to the electrical equipment, the output power parameter and the output electrical parameter ratio of the photovoltaic panel are determined firstly. Then, the connection status between the photovoltaic panel and the micro-inverter is adjusted based on the output power parameter and the output electrical parameter ratio, that is, it is determined whether the micro-inverter gets access to the photovoltaic panel based on the output power parameter and the output electrical parameter ratio. In the above scheme, it can be determined whether to control the photovoltaic panel to access the micro-inverter for operation by analyzing the output of the photovoltaic panel based on actual output conditions of the photovoltaic panel. In this way, even without knowing the specifications of the photovoltaic panel or whether the photovoltaic panel is in daytime or nighttime, connection control between the micro-inverter and the photovoltaic panel can still be achieved precisely, thereby effectively improving the access reliability of the photovoltaic panel.

Referring to FIG. 3, in an embodiment, a step in which the output power parameter and the output electrical parameter ratio of the photovoltaic panel are determined includes steps 302, 304, and 306.

Step 302: a first output voltage of the photovoltaic panel of the photovoltaic system is obtained in a case of the switching device being opened.

Step 304: a second output voltage of the photovoltaic panel is obtained in a case of the switching device being closed.

Step 306: the output power parameter and the output electrical parameter ratio are determined based on the first output voltage, the second output voltage, and a resistance value of the load device.

Specifically, the resistance value of the load device refers to an equivalent resistance value of the load device, which may specifically vary depending on a type of load device. This resistance value can be stored in the controller in a preset form. In the scheme provided by the embodiments of the present disclosure, the output end of the photovoltaic panel gets access to the micro-inverter, and supplies power to the electrical equipment through the micro-inverter. Additionally, the switching device and the load device are connected in series at the output end of the photovoltaic panel. During the operation of the photovoltaic panel, the first output voltage of the photovoltaic panel can be obtained at the output end by controlling the switching device to be opened.

It should be noted that a method of opening the switching device is not limited, and a corresponding operation may differ depending on the type of switching device. In an embodiment, taking the switching device as a power switching tube or a relay as an example, the switching device is also connected to the controller, and when the controller detects a need to detect the output of the photovoltaic panel, the controller controls an on-off status of the switching device. In another embodiment, the switching device can also be a manual switch, and when the need to detect the output of the photovoltaic panel is detected, the user can manually control the on-off status of the switching device, which is not limited herein.

A method for obtaining the first output voltage is not limited. In an embodiment, a voltage collector can be provided at the output end of the photovoltaic panel, which is connected to the controller through wired or wireless communication. When the switching device is opened, the voltage collector obtains the first output voltage and transmits it to the controller. In another embodiment, the controller may be integrated with a voltage collection function and is directly connected to the output end of the photovoltaic panel to perform a voltage collection operation at the output end of the photovoltaic panel.

As described above, the switching device and the load device are provided at the output end of the photovoltaic panel. After the first output voltage is obtained by manually opening the switching device or having the controller to control the switching device to be opened, the switching device can be closed either manually by the user or automatically by the controller. In a case of the switching device being closed, the second output voltage of the photovoltaic panel can be obtained through the voltage collector or directly collected by the controller.

After the first output voltage and the second output voltage are obtained, the controller retrieves the resistance value of the load device. By analyzing and calculating the first output voltage, the second output voltage and the resistance value, the output power parameter and the output electrical parameter ratio can be determined.

In the above scheme, the first and second output voltages of the photovoltaic panel are obtained based on the on-off status of the switching device and the output power parameter and the output electrical parameter ratio are calculated by combining the first output voltage, the second output voltage and the resistance value of the load device, which ensures high calculation accuracy.

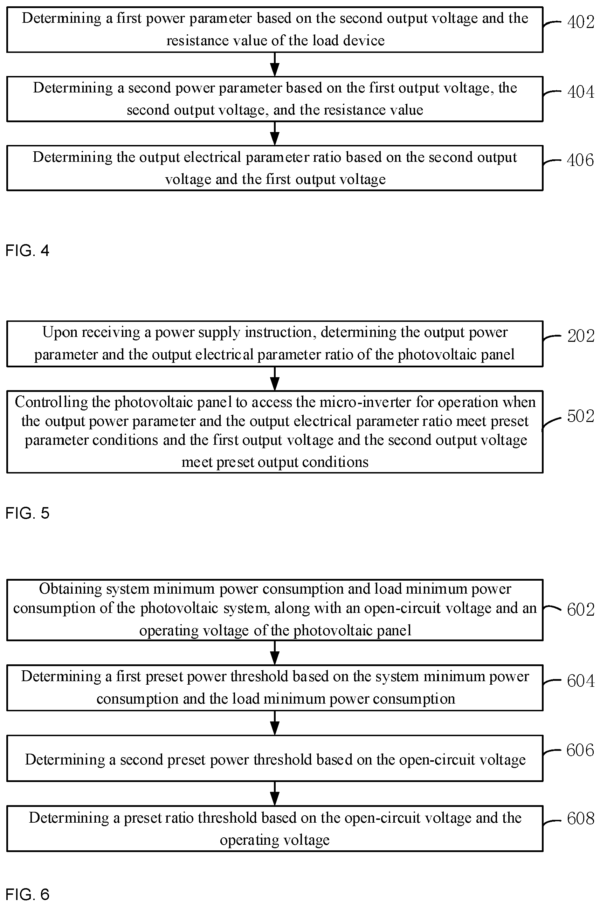

Referring to FIG. 4, in an embodiment, step 306 includes step 402, step 404, and step 406.

Step 402: a first power parameter is determined based on the second output voltage and the resistance value of the load device.

Step 404: a second power parameter is determined based on the first output voltage, the second output voltage, and the resistance value.

Step 406: the output electrical parameter ratio is determined based on the second output voltage and the first output voltage.

Specifically, after the first output voltage and the second output voltage are collected and obtained in a case of the switching device being opened and closed, respectively, the controller analyzes the first output voltage and the second output voltage to determine the first power parameter, the second power parameter, and the output electrical parameter ratio required for detecting the output of the photovoltaic panel.

The output power parameter refers to a parameter obtained by analyzing the first output voltage and/or the second output voltage, which characterizes an output power of the photovoltaic panel. The output electrical parameter ratio refers to a parameter that characterizes variation in the first output voltage and the second output voltage.

Further, the first power parameter is determined based on the second output voltage and the resistance value of the load device, and is configured to characterize power generated by the output of the photovoltaic panel after the load device is accessed. The second power parameter is determined by analyzing voltage difference between the first output voltage and the second output voltage, and the resistance value, and is configured to characterize power variation caused by accessing of the load device.

During the operation of the photovoltaic panel, the output end of the photovoltaic panel may be voltage-divided by the load device with the on-off status of the switching device, causing corresponding changes in the power at the output end of the photovoltaic panel. Therefore, in the scheme of this embodiment, it needs to combine the first output voltage, the second output voltage, and the resistance value of the load device to determine the output power parameter, ensuring that the output power parameter can reasonably characterize an output condition of the photovoltaic panel.

Specifically, a power parameter of the photovoltaic system in an operation state of the load device in a case of the switching device being on, i.e., the first power parameter, can be calculated based on the second output voltage and the resistance value of the load device. The power variation of the photovoltaic system in a case of the switching device being on relative to a case of the switching device being off, i.e., the second power parameter, can be calculated based on the first output voltage, the second output voltage, and the resistance value of the load device.

In the above scheme, the first power parameter, the second power parameter, and the output electrical parameter ratio are taken to detect the output of the photovoltaic panel, effectively improving accuracy of determining access of the photovoltaic panel.

Referring to FIG. 5, in an embodiment, step 204 includes step 502.

Step 502: the photovoltaic panel is controlled to access the micro-inverter for operation in a case where the output power parameter and the output electrical parameter ratio meet preset parameter conditions, and the first output voltage and the second output voltage meet preset output conditions.

Specifically, the preset parameter conditions refer to predefined conditions that the output power parameter and the output electrical parameter ratio need to meet when the photovoltaic panel gets access to the micro-inverter to supply power to the electrical equipment. The preset output conditions refer to predefined conditions that the first output voltage and the second output voltage need to meet when the photovoltaic panel gets access to the micro-inverter to supply power to the electrical equipment.

The controller is pre-stored with the preset parameter conditions and the preset output conditions. After the first output voltage and the second output voltage are analyzed to determine the output power parameter and the output electrical parameter ratio, the controller may determine whether the output power parameter and the output electrical parameter ratio meet the preset parameter conditions. Furthermore, after the first output voltage and the second output voltage are obtained, the controller may further determine whether the first output voltage and the second output voltage meet the preset output conditions. Finally, when the output power parameter and the output electrical parameter ratio meet the preset parameter conditions and the first output voltage and the second output voltage meet the preset output conditions, the photovoltaic panel is controlled to be accessed to the micro-inverter, and supply power to the electrical equipment through the micro-inverter. When the output power parameter and the output electrical parameter ratio do not meet the preset parameter conditions and/or the first output voltage and the second output voltage do not meet the preset output conditions, the controller may not control the photovoltaic panel to be accessed to the micro-inverter for operation.

With the above scheme, the first output voltage, the second output voltage, and the resistance value of the load device are taken to determine the output power parameter and the output electrical parameter ratio. The photovoltaic panel is controlled to be accessed to the micro-inverter for operation only when the output power parameter and the output electrical parameter ratio and the first and second output voltages meet certain conditions respectively, which exhibits high accuracy in access control.

It should be noted that in an embodiment, an operation of the controller to determine whether the first output voltage and the second output voltage meet the preset output conditions can be performed after the controller determines whether the output power parameter and the output electrical parameter ratio meet the preset parameter conditions. In this case, the determination is performed only if the controller determines that the output power parameter and the output electrical parameter ratio meet the preset parameter conditions; otherwise, there is no need to determine whether the first and second output voltages meet the preset output conditions.

In another embodiment, the operation can also be performed before the controller determines whether the output power parameter and the output electrical parameter ratio meet the preset parameter conditions. Correspondingly, in this case, it is needed for the controller to determine whether the first output voltage and the second output voltage meet the preset output conditions, and only if the first output voltage and the second output voltage meet the preset output conditions, the controller proceeds to determine whether the output power parameter and the output electrical parameter ratio meet the preset parameter conditions; otherwise, there is no need to determine whether the output power parameter and the output electrical parameter ratio meet the preset parameter conditions.

Furthermore, in other embodiments, the operation can also be performed before the controller determines the output power parameter and the output electrical parameter ratio based on the first output voltage and the second output voltage. Correspondingly, in this case, it is needed for the controller to determine whether the first output voltage and the second output voltage meet the preset output conditions, and only if the first output voltage and the second output voltage meet the preset output conditions, the controller proceeds to determine the output power parameter and the output electrical parameter ratio; otherwise, there is no need to determine the output power parameter and the output electrical parameter ratio.

It should be noted that a calculation method for the first power parameter and the second power parameter is not limited. In a more detailed embodiment, a calculation method for the first power parameter is expressed as: b^2/R1=f, where f represents the first power parameter, b represents the second output voltage, and R1 represents the resistance value of the load device. Specifically, the first power parameter is obtained by dividing a square of the second output voltage by the resistance value.

A calculation method for the second power parameter is expressed as: (a-b)^2/R1=g, where g represents the second power parameter, a represents the first output voltage, b represents the second output voltage, and R1 represents the resistance value of the load device. Specifically, the second power parameter is obtained by dividing a square of voltage difference between the first output voltage and the second output voltage by the resistance value.

In more detail, in an embodiment, a calculation method for the output electrical parameter ratio is expressed as: b/a=h, where h represents the output electrical parameter ratio, a represents the first output voltage, and b represents the second output voltage. Specifically, a ratio of the second output voltage to the first output voltage is taken as the output electrical parameter ratio.

In an embodiment, the output power parameter and the output electrical parameter ratio meeting the preset parameter conditions includes: the first power parameter meeting a first parameter condition, the second power parameter meeting a second parameter condition, and the output electrical parameter ratio meeting a third parameter condition.

Specifically, in the scheme in this embodiment, corresponding to the output power parameter including the first power parameter and the second power parameter, the controller sets a respective parameter condition for each parameter. In determining whether the output power parameter and the output electrical parameter ratio meet the preset parameter conditions, it is necessary to sequentially determine whether the first power parameter meets the first parameter condition, the second power parameter meets the second parameter condition, and the output electrical parameter ratio meets the third parameter condition. Finally, if all of three parameters meet their respective parameter conditions simultaneously, it is considered that the output power parameter and the output electrical parameter ratio meet the preset parameter conditions; otherwise, it is considered that the output power parameter and the output electrical parameter ratio do not meet the preset parameter conditions.

In this scheme, it is determined whether the output power parameter and the output electrical parameter ratio meet the preset parameter conditions by individually determining whether the first power parameter meets the first parameter condition, the second power parameter meets the second parameter condition, and the output electrical parameter ratio meets the third parameter condition, which ensures high determination accuracy.

In an embodiment, the method includes at least one of following items:
First item: the first power parameter meets the first parameter condition, including that the first power parameter is greater than or equal to a first preset power threshold.

Second item: the second power parameter meets the second parameter condition, including that the second power parameter is less than or equal to a second preset power threshold.

Third item: the output electrical parameter ratio meets the third parameter condition, including that the output electrical parameter ratio is greater than or equal to a preset ratio threshold.

Specifically, in the scheme in this embodiment, the first preset power threshold, the second preset power threshold, and the preset ratio threshold are set for the first power parameter, the second power parameter, and the output electrical parameter ratio, respectively. Therefore, in an actual operation, it can be determined whether the first power parameter meets the first parameter condition by determining whether the first power parameter is greater than or equal to the first preset power threshold. And/or, it can be determined whether the second power parameter meets the second parameter condition by determining whether the second power parameter is less than or equal to the second preset power threshold. And/or, it can be further determined whether the output electrical parameter ratio meets the third parameter condition by determining whether the output electrical parameter ratio is greater than or equal to the preset ratio threshold.

In more detail, in an embodiment, upon obtaining the first power parameter, the second power parameter, and the output electrical parameter ratio, the controller performs compares and analyzes the first power parameter with the first preset power threshold, the second power parameter with the second preset power threshold, and the output electrical parameter ratio with the preset ratio threshold, which enables analysis and determination on whether the output power parameter and the output electrical parameter ratio meet the preset parameter conditions.

In the above scheme, different thresholds are set for the first power parameter, the second power parameter, and the output electrical parameter ratio, respectively, and it is determined whether the parameter conditions are met by comparing each parameter with its corresponding threshold, which offers advantages of a simple determination method and high determination efficiency, effectively improving operational efficiency of the photovoltaic panel.

Referring to FIG. 6, in an embodiment, before step 204, the method further includes steps 602, 604, 606, and 608.

Step 602: system minimum power consumption and load minimum power consumption of the photovoltaic system, along with an open-circuit voltage and an operating voltage of the photovoltaic panel, are obtained.

Step 604: the first preset power threshold is determined based on the system minimum power consumption and the load minimum power consumption.

Step 606: the second preset power threshold is determined based on the open-circuit voltage.

Step 608: the preset ratio threshold is determined based on the open-circuit voltage and the operating voltage.

Specifically, steps 602 to 608 can be performed between steps 202 and 204 or before step 202, which is not specifically limited. It should be noted that, in a more detailed embodiment, since the system minimum power consumption and the load minimum power consumption of the photovoltaic system, along with the open-circuit voltage and the operating voltage of the photovoltaic panel, may remain essentially constant when the photovoltaic system is accessed and the electrical equipment is fixed, steps 602 to 608 can be performed during first execution of the method described in the present disclosure and then the determined first preset power threshold, second preset power threshold, and preset ratio threshold are stored in the controller, which can be directly retrieved during subsequent executions of the method. Accordingly, if the electrical equipment or the photovoltaic panel in the photovoltaic system changes, steps 602 to 608 must be re-performed to update the first preset power threshold, second preset power threshold, and preset ratio threshold.

When the controller has a need for monitoring of the output of the photovoltaic panel, it retrieves the system minimum power consumption and the load minimum power consumption of the photovoltaic system, along with the open-circuit voltage and the operating voltage of the photovoltaic panel. The first preset power threshold is determined by analyzing the system minimum power consumption and the load minimum power consumption, the second preset power threshold is determined based on the open-circuit voltage, and the preset ratio threshold is determined based on both the open-circuit voltage and the operating voltage.

In more detail, in an embodiment, the first preset power threshold is calculated as a sum of the system minimum power consumption, load minimum power consumption, and a fixed power value. The fixed power value is not limited to a specific number and can be set as 10W, 20W, 30W, or other values depending on actual needs, which is not specifically limited.

The second preset power threshold, determined based on the open-circuit voltage, is calculated as: (k-k*0.5)^2/R1, where * represents multiplication, ^ represents square, k represents the open-circuit voltage, and R1 represents the resistance value of the load device. Specifically, the second preset power threshold is obtained by dividing a square of (k-k*0.5) by the resistance value.

The preset ratio threshold is related to the open-circuit voltage and the operating voltage, which can be obtained by multiplying the open-circuit voltage and the operating voltage by a corresponding ratio. The ratio can be set depending on specific requirements. For instance, the ratio can be 0.7, 0.8, 0.9, or the like, which is specifically not limited.

In the above scheme, the first preset power threshold, the second preset power threshold, and the preset ratio threshold are determined based on the system minimum power consumption, the load minimum power consumption, the open-circuit voltage, and the operating voltage. By integrating the analysis and determination of the output power parameter and the output electrical parameter ratio with an actual state of the photovoltaic system, accuracy of the preset parameter conditions is ensured.

In an embodiment, the first output voltage and the second output voltage meeting the preset output conditions includes both the first output voltage and the second output voltage fall within a preset input voltage range.

Specifically, the preset input voltage range refers to a predefined range of an input voltage required for a normal operation of the electrical equipment accessed to the photovoltaic system. In this embodiment, after the first output voltage and the second output voltage are obtained, the controller compares and analyzes the first output voltage and the second output voltage with the preset input voltage range. If both the first output voltage and the second output voltage are within the preset input voltage range, it is considered that they meet the preset output conditions.

It should be noted that the preset input voltage range is not unique. In actual scenarios, the preset input voltage range varies depending on a type of the electrical equipment accessed to the micro-inverter and can be set according to the actual scenarios. For example, in a more detailed embodiment, the preset input voltage range can be set to 80V to 100V.

In this method, when both the first output voltage and the second output voltage fall within the preset input voltage range, it is considered that the preset output conditions are met, ensuring that the output voltage of the photovoltaic panel meets power requirements of the electrical equipment.

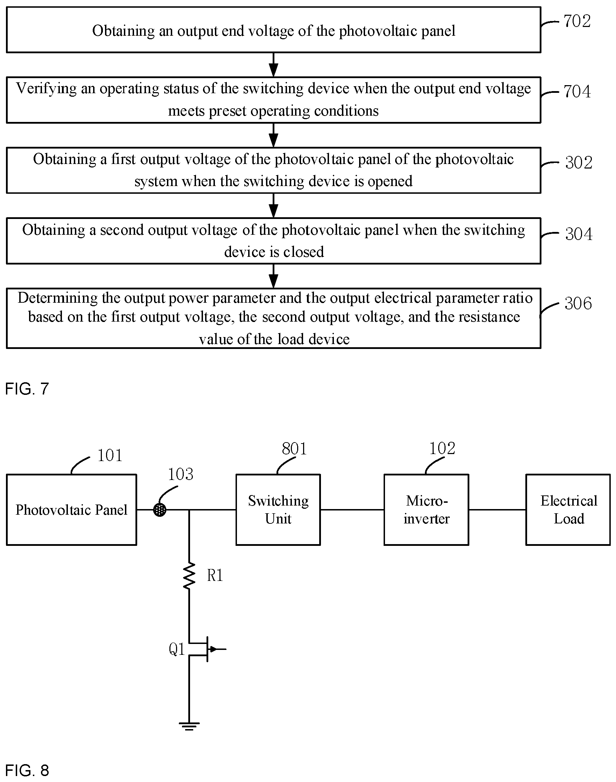

Referring to FIG. 7, in an embodiment, before step 302, the method further includes steps 702 and 704.

Step 702: an output end voltage of the photovoltaic panel is obtained.

Step 704: an operating status of the switching device is verified in a case where the output end voltage meets the preset operating conditions.

Specifically, in a case where a need for output monitoring of the photovoltaic panel is detected by a power supply instruction, the output end voltage of the photovoltaic panel is first obtained for analysis. In a case where the output end voltage meets the preset operating conditions (specifically, the output end voltage is greater than or equal to a preset operating voltage threshold), the controller further detects the operating status of the switching device, and finally obtains the first output voltage and the second output voltage respectively based on the operating status of the switching device, enabling a determination of whether the photovoltaic panel should be accessed.

In the above scheme, the controller performs analysis and determination of whether the photovoltaic panel should be accessed after the power supply instruction is received, ensuring that the photovoltaic panel supplies power while matching a state of the electrical equipment, thereby improving the reliability of the photovoltaic panel's power supply.

In an embodiment, a step in which the photovoltaic panel is controlled to be accessed to the micro-inverter for operation includes controlling the switching unit, which is connected to both the photovoltaic panel and the micro-inverter, to turn on.

Specifically, the micro-inverter is configured to be connected with the electrical equipment. In this embodiment, the switching unit is further provided between the photovoltaic panel and the micro-inverter. The switching unit is connected to the controller, which controls the photovoltaic panel to be accessed to the micro-inverter or to be disconnected from the micro-inverter by controlling the switching unit to turn on or off. In a case where the photovoltaic panel gets access to the micro-inverter, the electric energy can be output to the electrical equipment through the micro inverter, and in a case where the photovoltaic panel is not accessed to the micro-inverter, the electrical equipment remains unpowered and stops operating.

It should be noted that a specific type of switching unit is not limited. Selection of the corresponding switching unit may vary depending on a model of the photovoltaic panel. For example, in an embodiment, a DC converter may be used as the switching unit, and connection between the photovoltaic panel and the micro-inverter is controlled by starting or stopping the DC converter. In another embodiment, a power switch or a relay may also be used as the switching unit, which can be selected according to the actual scenario and is not limited herein.

In the above scheme, access control between the photovoltaic panel and the micro-inverter is realized by controlling the switching unit provided between the photovoltaic panel and the micro-inverter, effectively improving the reliability of the access control for the photovoltaic panel.

To facilitate understanding of the technical schemes of the present disclosure, illustration is made in the following in combination with detailed embodiments.

Firstly, upon receiving the power supply instruction, the controller detects whether the output end voltage of the photovoltaic panel meets the preset operating condition, that is, whether the output end voltage is greater than the preset operating voltage threshold. If the preset operating condition is met, the controller further detects the status of the switching device. In a case where the switching device is opened, the first output voltage a of the photovoltaic panel is obtained. Then, the controller controls the switching device to be closed and the second output voltage b of the photovoltaic panel is obtained.

Afterwards, the controller calculates the first power parameter f, the second power parameter g, and the output electrical parameter ratio h based on the first output voltage a, the second output voltage b, and the resistance value R1 of the load device (which may be a resistor), in a form as: b^2/R1=f; (a-b)^2/R1=g; b/a=h.

Then, it is determined whether f is greater than or equal to the first preset power threshold (which may be the sum of the system minimum power consumption, the load minimum power consumption and a fixed power value); whether g is less than or equal to the second preset power threshold, where the second preset power threshold can be (k-k*0.5)^2/R1; whether the output electrical parameter ratio is greater than or equal to the preset ratio threshold (obtained by multiplying the open-circuit voltage and the operating voltage by the corresponding ratio, such as 0.8); and whether the first output voltage a and the second output voltage b both fall within the preset input voltage range. If above determinations are all true, it is considered that the output power parameter and the output electrical parameter ratio meet the preset parameter conditions, and that the first output voltage and second output voltage meet the preset output conditions. At this point, the controller may control the switching unit to conduct or turn on, allowing the electrical energy output by the photovoltaic panel to be transmitted to the electrical equipment through the switching unit and the micro-inverter.

It should be understood that, although various steps in the flowcharts involved in the embodiments described above are illustrated in an order indicated by the arrows, these steps are not necessarily performed in the order indicated by the arrows. Unless explicitly stated herein, there is no strict sequential restriction on execution of these steps, and they may be performed in other orders. Furthermore, at least some of the steps in the flowcharts involved in the embodiments described above may include multiple steps or multiple stages, and these steps or stages are not necessarily completed at the same time but may be executed at different times. The execution order of these steps or stages is also not necessarily sequential but may be performed alternatively or alternately with at least part of other steps, or at least part of steps or stages in the other steps.

Referring to FIG. 1, the present disclosure further provides a photovoltaic system, which includes: a load device R1, a micro-inverter 102, a photovoltaic panel 101, a voltage collector 103, a switching device Q1, and a controller (not shown). The micro-inverter 102 is configured to be connected to the electrical equipment. An output end of the photovoltaic panel 101 is connected to a first end of the load device R1 and the micro-inverter 102. The voltage collector 103 is provided at the output end of the photovoltaic panel 101.A first end of the switching device Q1 is connected to a second end of the load device R1, and a second end of the switching device Q1 is grounded. The controller is connected to the voltage collector 103 and the third end of the switching device Q1 to implement the steps of the method described above.

Specifically, implementation of the method is shown in the above embodiments and will not be repeated here. In the photovoltaic system, the load device R1 and the switching device Q1 are connected in series at the output end of the photovoltaic panel 101. Upon receiving the power supply instruction to supply power to the electrical equipment, an output power parameter and an output electrical parameter ratio of the photovoltaic panel 101 are first determined. Then, a connection status between the photovoltaic panel 101 and the micro-inverter 102 is adjusted based on the output power parameter and the output electrical parameter ratio, that is, it is determined whether the micro-inverter 102 gets access to the photovoltaic panel 101 based on the output power parameter and the output electrical parameter ratio. In the above scheme, it can be determined whether to control the photovoltaic panel 101 to be accessed to the micro-inverter 102 for operation by analyzing an output of the photovoltaic panel 101 based on actual output conditions of the photovoltaic panel 101. Thus, even without knowing the specifications of the photovoltaic panel 101 or whether the photovoltaic panel 101 is in daytime or nighttime, connection control between the micro-inverter 102 and the photovoltaic panel 101 can still be achieved precisely, thereby effectively improving the access reliability of the photovoltaic panel 101.

In an embodiment, the load device R1 is a resistor.

Specifically, a specific type of load device R1 is not limited, as long as it can be used as a load to consume electrical energy. In this embodiment, the load device R1 can be a resistor, which may specifically be a single resistor or a resistor assembly formed by multiple resistors connected in series and/or parallel. In another embodiment, the load device R1 may be an energy-consuming device, such as an indicator light.

Similarly, the specific type of switching device Q1 is not limited. In an embodiment, the switching device Q1 is a power switching tube or a relay. The power switching tube may include a triode, a field-effect transistor, or an insulated-gate bipolar transistor, etc., which is not limited specifically.

Referring to FIG. 8, in an embodiment, the photovoltaic system further includes a switching unit 801, and the output end of the photovoltaic panel 101 is connected to the micro-inverter 102 through the switching unit 801.

Specifically, in this embodiment, the switching unit 801 is further provided between the photovoltaic panel 101 and the micro-inverter 102. The switching unit 801 is connected to the controller, which controls the photovoltaic panel 101 to be accessed to the micro-inverter 102 or to be disconnected from the micro-inverter 102 by turning the switching unit 801 on or off. In a case where the photovoltaic panel 101 gets access to the micro-inverter 102, the electrical energy can be output to the electrical equipment through the micro-inverter 102, and in a case where the photovoltaic panel 101 is not accessed to the micro-inverter 102, the electrical equipment remains unpowered and stops operating.

It should be noted that a specific type of switching unite 801 is not limited. Selection of the corresponding switching unit 801 may vary depending on a model of the photovoltaic panel 101. For example, in an embodiment, a DC converter may be used as the switching unit 801, where the connection between the photovoltaic panel 101 and the micro-inverter 102 is controlled by starting or stopping the DC converter. In another embodiment, a power switch or a relay may also be used as the switching unit 801, which can be selected according to the actual scenarios and is not limited herein.

Various technical features of the above embodiments can be combined arbitrarily. To make the description concise, not all possible combinations of the technical features in the embodiments are described. However, as long as no contradiction occurs between the combinations of these technical features, the combinations should be considered within the scope of the appended claims.

## Claims

1. A method for operating a photovoltaic system, wherein the photovoltaic system comprises a photovoltaic panel (101), a switching device, a load device, and a micro-inverter (102), in which an output end of the photovoltaic panel (101) is connected to a first end of the load device and the micro-inverter (102), a second end of the load device is connected to a first end of the switching device, and a second end of the switching device is grounded, the method comprising:
- upon receiving a power supply instruction, determining an output power parameter and an output electrical parameter ratio of the photovoltaic panel (101); and
- adjusting a connection status between the photovoltaic panel (101) and the micro-inverter (102) based on the output power parameter and the output electrical parameter ratio, wherein the connection status comprises the micro-inverter (102) being connected or disconnected from the photovoltaic panel;
wherein said determining an output power parameter and an output electrical parameter ratio of the photovoltaic panel (101) comprises:
- obtaining a first output voltage of the photovoltaic panel (101) in a case of the switching device being opened;
- obtaining a second output voltage of the photovoltaic panel (101) in a case of the switching device being closed; and
- determining the output power parameter and the output electrical parameter ratio based on the first output voltage and the second output voltage, wherein the output power parameter represents an output power of the photovoltaic panel (101) and the output electrical parameter ratio represents a ratio of the first output voltage and the second output voltage.

2. The method according to claim 1, wherein the output power parameter comprises a first power parameter and a second power parameter, and said determining the output power parameter and the output electrical parameter ratio based on the first output voltage, the second output voltage, and a resistance value of the load device comprises:
- determining the first power parameter based on the second output voltage and the resistance value of the load device, the first power parameter representing power generated by the output of the photovoltaic panel (101) after the load device is accessed;
- determining the second power parameter based on the first output voltage, the second output voltage, and the resistance value, the second power parameter representing power variation caused by accessing of the load device; and
- determining the output electrical parameter ratio based on the second output voltage and the first output voltage.

3. The method according to claim 2, wherein said adjusting a connection status between the photovoltaic panel (101) and the micro-inverter (102) based on the output power parameter and the output electrical parameter ratio comprises:
- controlling the photovoltaic panel (101) to access the micro-inverter (102) for operation in a case where the output power parameter and the output electrical parameter ratio meet preset parameter conditions and the first output voltage and the second output voltage meet preset output conditions,
wherein the output power parameter and the output electrical parameter ratio meet preset parameter conditions, which comprises:
- the first power parameter meeting a first parameter condition, the second power parameter meeting a second parameter condition, and the output electrical parameter ratio meeting a third parameter condition;
wherein the output power parameter and the output electrical parameter ratio meet preset parameter conditions, which comprises at least one of:
- the first power parameter being greater than or equal to a first preset power threshold;
- the second power parameter being less than or equal to a second preset power threshold; and
- the output electrical parameter ratio being greater than or equal to a preset ratio threshold.

4. The method according to any one of the preceding claims, before said adjusting a connection status between the photovoltaic panel (101) and the micro-inverter (102) based on the output power parameter and the output electrical parameter ratio, further comprising:
- obtaining system minimum power consumption and load minimum power consumption of the photovoltaic system, along with an open-circuit voltage and an operating voltage of the photovoltaic panel (101);
- determining a first preset power threshold based on the system minimum power consumption and the load minimum power consumption;
- determining a second preset power threshold based on the open-circuit voltage, the second preset power threshold calculated as: (k-k*0.5)^2/R1, where * represents multiplication, ^ represents square, k represents the open-circuit voltage, and R1 represents the resistance value of the load device; and
- determining a preset ratio threshold based on the open-circuit voltage and the operating voltage, the preset ratio threshold obtained by multiplying the open-circuit voltage and the operating voltage by a corresponding ratio.

5. The method according to claim 3, wherein:
- before obtaining a first output voltage of the photovoltaic panel (101) in a case of the switching device being opened, the method further comprises: obtaining an output end voltage of the photovoltaic panel (101); verifying an operating status of the switching device in a case where the output end voltage meets preset operating conditions.

6. The method according to claim 3, wherein:
- said controlling the photovoltaic panel (101) to access the micro-inverter (102) for operation comprises: controlling the switching unit (801) which is separately connected to the photovoltaic panel (101) and the micro-inverter (102) to turn on, the micro-inverter (102) being configured to be connected with electrical equipment.

7. The method according to claim 3, wherein:
- before obtaining a first output voltage of the photovoltaic panel (101) in a case of the switching device being opened, the method further comprises: obtaining an output end voltage of the photovoltaic panel (101); verifying an operating status of the switching device in a case where the output end voltage meets preset operating conditions;
- said controlling the photovoltaic panel (101) to access the micro-inverter (102) for operation comprises: controlling the switching unit (801) which is separately connected to the photovoltaic panel (101) and the micro-inverter (102) to turn on, the micro-inverter (102) being configured to be connected with electrical equipment.

8. The method according to any one of claims 2 to 3, wherein the first power parameter is obtained by dividing a square of the second output voltage by the resistance value.

9. A photovoltaic system comprising:
- a load device;
- a micro-inverter (102) configured to be connected to electrical equipment;
- a photovoltaic panel (101), an output end of which is connected to a first end of the load device and the micro-inverter (102);
- a voltage collector (103) provided at the output end of the photovoltaic panel (101);
- a switching device, a first end of which is connected to a second end of the load device, and a second end of which is grounded; and
- a controller connected to the voltage collector (103) and a third end of the switching device adopted to carry out the method according to any one of the preceding claims.

## Patentansprüche

1. Verfahren zum Betreiben eines Photovoltaiksystems, wobei das Photovoltaiksystem ein Photovoltaikpaneel (101), eine Schaltvorrichtung, eine Lastvorrichtung und einen Mikrowechselrichter (102) umfasst, wobei ein Ausgangsende des Photovoltaikpaneels (101) mit einem ersten Ende der Lastvorrichtung und dem Mikrowechselrichter (102) verbunden ist, ein zweites Ende der Lastvorrichtung mit einem ersten Ende der Schaltvorrichtung verbunden ist und ein zweites Ende der Schaltvorrichtung geerdet ist, wobei das Verfahren Folgendes umfasst:
- beim Empfangen einer Stromversorgungsanweisung Bestimmen eines Ausgangsleistungsparameters und eines Verhältnisses elektrischer Ausgangsparameter des Photovoltaikpaneels (101); und
- Einstellen eines Verbindungsstatus zwischen dem Photovoltaikpaneel (101) und dem Mikrowechselrichter (102) basierend auf dem Ausgangsleistungsparameter und dem Verhältnis elektrischer Ausgangsparameter, wobei der Verbindungsstatus umfasst, dass der Mikrowechselrichter (102) mit dem Photovoltaikpaneel verbunden oder davon getrennt ist;
wobei das Bestimmen eines Ausgangsleistungsparameters und eines Verhältnisses elektrischer Ausgangsparameter des Photovoltaikpaneels (101) Folgendes umfasst:
- Erhalten einer ersten Ausgangsspannung des Photovoltaikpaneels (101) in einem Fall, in dem die Schaltvorrichtung geöffnet ist;
- Erhalten einer zweiten Ausgangsspannung des Photovoltaikpaneels (101) in einem Fall, in dem die Schaltvorrichtung geschlossen ist; und
- Bestimmen des Ausgangsleistungsparameters und des Verhältnisses elektrischer Ausgangsparameter basierend auf der ersten Ausgangsspannung und der zweiten Ausgangsspannung, wobei der Ausgangsleistungsparameter eine Ausgangsleistung des Photovoltaikpaneels (101) darstellt und das Verhältnis elektrischer Ausgangsparameter ein Verhältnis der ersten Ausgangsspannung und der zweiten Ausgangsspannung darstellt.

2. Verfahren nach Anspruch 1, wobei der Ausgangsleistungsparameter einen ersten Leistungsparameter und einen zweiten Leistungsparameter umfasst und das Bestimmen des Ausgangsleistungsparameters und des Verhältnisses elektrischer Ausgangsparameter basierend auf der ersten Ausgangsspannung, der zweiten Ausgangsspannung und einem Widerstandswert der Lastvorrichtung Folgendes umfasst:
- Bestimmen des ersten Leistungsparameters basierend auf der zweiten Ausgangsspannung und dem Widerstandswert der Lastvorrichtung, wobei der erste Leistungsparameter Leistung darstellt, die durch den Ausgang des Photovoltaikpaneels (101) erzeugt wird, nachdem die Lastvorrichtung angeschlossen ist;
- Bestimmen des zweiten Leistungsparameters basierend auf der ersten Ausgangsspannung, der zweiten Ausgangsspannung und dem Widerstandswert, wobei der zweite Leistungsparameter eine durch Anschließen der Lastvorrichtung verursachte Leistungsänderung darstellt; und
- Bestimmen des Verhältnisses elektrischer Ausgangsparameter basierend auf der zweiten Ausgangsspannung und der ersten Ausgangsspannung.

3. Verfahren nach Anspruch 2, wobei das Einstellen eines Verbindungsstatus zwischen dem Photovoltaikpaneel (101) und dem Mikrowechselrichter (102) basierend auf dem Ausgangsleistungsparameter und dem Verhältnis elektrischer Ausgangsparameter Folgendes umfasst:
- Steuern des Photovoltaikpaneels (101), um den Mikrowechselrichter (102) zum Betrieb zu verbinden, in einem Fall, in dem der Ausgangsleistungsparameter und das Verhältnis elektrischer Ausgangsparameter voreingestellte Parameterbedingungen erfüllen und die erste Ausgangsspannung und die zweite Ausgangsspannung voreingestellte Ausgangsbedingungen erfüllen,
wobei der Ausgangsleistungsparameter und das Verhältnis elektrischer Ausgangsparameter voreingestellte Parameterbedingungen erfüllen, was Folgendes umfasst:
- wobei der erste Leistungsparameter eine erste Parameterbedingung erfüllt, der zweite Leistungsparameter eine zweite Parameterbedingung erfüllt und das Verhältnis elektrischer Ausgangsparameter eine dritte Parameterbedingung erfüllt;
wobei der Ausgangsleistungsparameter und das Verhältnis elektrischer Ausgangsparameter voreingestellte Parameterbedingungen erfüllen, was mindestens eines von Folgendem umfasst:
- wobei der erste Leistungsparameter größer als oder gleich einem ersten voreingestellten Leistungsschwellenwert ist;
- wobei der zweite Leistungsparameter kleiner als oder gleich einem zweiten voreingestellten Leistungsschwellenwert ist; und
- wobei das Verhältnis elektrischer Ausgangsparameter größer als oder gleich einem voreingestellten Verhältnisschwellenwert ist.

4. Verfahren nach einem der vorhergehenden Ansprüche, das vor dem Einstellen eines Verbindungsstatus zwischen dem Photovoltaikpaneel (101) und dem Mikrowechselrichter (102) basierend auf dem Ausgangsleistungsparameter und dem Verhältnis elektrischer Ausgangsparameter ferner Folgendes umfasst:
- Erhalten eines minimalen Systemleistungsverbrauchs und eines minimalen Lastleistungsverbrauchs des Photovoltaiksystems zusammen mit einer Leerlaufspannung und einer Betriebsspannung des Photovoltaikpaneels (101);
- Bestimmen eines ersten voreingestellten Leistungsschwellenwerts basierend auf dem minimalen Systemleistungsverbrauch und dem minimalen Lastleistungsverbrauch;
- Bestimmen eines zweiten voreingestellten Leistungsschwellenwerts basierend auf der Leerlaufspannung, wobei der zweite voreingestellte Leistungsschwellenwert berechnet wird als: (k-k*0,5)^2/R1, wobei * Multiplikation darstellt, ^ Quadrat darstellt, k die Leerlaufspannung darstellt und R1 den Widerstandswert der Lastvorrichtung darstellt; und
- Bestimmen eines voreingestellten Verhältnisschwellenwerts basierend auf der Leerlaufspannung und der Betriebsspannung, wobei der voreingestellte Verhältnisschwellenwert durch Multiplizieren der Leerlaufspannung und der Betriebsspannung mit einem entsprechenden Verhältnis erhalten wird.

5. Verfahren nach Anspruch 3, wobei:
- vor dem Erhalten einer ersten Ausgangsspannung des Photovoltaikpaneels (101) in einem Fall, in dem die Schaltvorrichtung geöffnet ist, das Verfahren ferner Folgendes umfasst: Erhalten einer Ausgangsendspannung des Photovoltaikpaneels (101); Verifizieren eines Betriebsstatus der Schaltvorrichtung in einem Fall, in dem die Ausgangsendspannung voreingestellte Betriebsbedingungen erfüllt.

6. Verfahren nach Anspruch 3, wobei:
- das Steuern des Photovoltaikpaneels (101), um den Mikrowechselrichter (102) zum Betrieb zu verbinden, Folgendes umfasst: Steuern der Schalteinheit (801), die separat mit dem Photovoltaikpaneel (101) und dem Mikrowechselrichter (102) verbunden ist, um die Schalteinheit (801) einzuschalten, wobei der Mikrowechselrichter (102) eingerichtet ist, mit elektrischer Ausrüstung verbunden zu werden.

7. Verfahren nach Anspruch 3, wobei:
- vor dem Erhalten einer ersten Ausgangsspannung des Photovoltaikpaneels (101) in einem Fall, in dem die Schaltvorrichtung geöffnet ist, das Verfahren ferner Folgendes umfasst: Erhalten einer Ausgangsendspannung des Photovoltaikpaneels (101); Verifizieren eines Betriebsstatus der Schaltvorrichtung in einem Fall, in dem die Ausgangsendspannung voreingestellte Betriebsbedingungen erfüllt;
- das Steuern des Photovoltaikpaneels (101), um den Mikrowechselrichter (102) zum Betrieb zu verbinden, Folgendes umfasst: Steuern der Schalteinheit (801), die separat mit dem Photovoltaikpaneel (101) und dem Mikrowechselrichter (102) verbunden ist, um die Schalteinheit (801) einzuschalten, wobei der Mikrowechselrichter (102) eingerichtet ist, mit elektrischer Ausrüstung verbunden zu werden.

8. Verfahren nach einem der Ansprüche 2 bis 3, wobei der erste Leistungsparameter durch Dividieren eines Quadrats der zweiten Ausgangsspannung durch den Widerstandswert erhalten wird.

9. Photovoltaiksystem, umfassend:
- eine Lastvorrichtung;
- einen Mikrowechselrichter (102), der eingerichtet ist, mit elektrischer Ausrüstung verbunden zu werden;
- ein Photovoltaikpaneel (101), dessen Ausgangsende mit einem ersten Ende der Lastvorrichtung und dem Mikrowechselrichter (102) verbunden ist;
- einen Spannungskollektor (103), der an dem Ausgangsende des Photovoltaikpaneels (101) bereitgestellt ist;
- eine Schaltvorrichtung, deren erstes Ende mit einem zweiten Ende der Lastvorrichtung verbunden ist und deren zweites Ende geerdet ist; und
- eine Steuerung, die mit dem Spannungskollektor (103) und einem dritten Ende der Schaltvorrichtung verbunden ist und dazu ausgelegt ist, das Verfahren nach einem der vorhergehenden Ansprüche auszuführen.

## Revendications

1. Procédé de fonctionnement d'un système photovoltaïque, dans lequel le système photovoltaïque comprend un panneau photovoltaïque (101), un dispositif de commutation, un dispositif de charge et un micro-onduleur (102), dans lequel une extrémité de sortie du panneau photovoltaïque (101) est connectée à une première extrémité du dispositif de charge et au micro-onduleur (102), une deuxième extrémité du dispositif de charge est connectée à une première extrémité du dispositif de commutation, et une deuxième extrémité du dispositif de commutation est mise à la masse, le procédé comprenant :
- à la réception d'une instruction d'alimentation en puissance, la détermination d'un paramètre de puissance de sortie et d'un rapport de paramètres électriques de sortie du panneau photovoltaïque (101) ; et
- l'ajustement d'un état de connexion entre le panneau photovoltaïque (101) et le micro-onduleur (102) sur la base du paramètre de puissance de sortie et du rapport de paramètres électriques de sortie, dans lequel l'état de connexion comprend le fait que le micro-onduleur (102) est connecté au ou déconnecté du panneau photovoltaïque ;
dans lequel ladite détermination d'un paramètre de puissance de sortie et d'un rapport de paramètres électriques de sortie du panneau photovoltaïque (101) comprend :
- l'obtention d'une première tension de sortie du panneau photovoltaïque (101) dans un cas dans lequel le dispositif de commutation est ouvert ;
- l'obtention d'une deuxième tension de sortie du panneau photovoltaïque (101) dans un cas dans lequel le dispositif de commutation est fermé ; et
- la détermination du paramètre de puissance de sortie et du rapport de paramètres électriques de sortie sur la base de la première tension de sortie et de la deuxième tension de sortie, dans lequel le paramètre de puissance de sortie représente une puissance de sortie du panneau photovoltaïque (101) et le rapport de paramètres électriques de sortie représente un rapport de la première tension de sortie et de la deuxième tension de sortie.

2. Procédé selon la revendication 1, dans lequel le paramètre de puissance de sortie comprend un premier paramètre de puissance et un deuxième paramètre de puissance, et ladite détermination du paramètre de puissance de sortie et du rapport de paramètres électriques de sortie sur la base de la première tension de sortie, de la deuxième tension de sortie et d'une valeur de résistance du dispositif de charge comprend :
- la détermination du premier paramètre de puissance sur la base de la deuxième tension de sortie et de la valeur de résistance du dispositif de charge, le premier paramètre de puissance représentant une puissance générée par la sortie du panneau photovoltaïque (101) après l'accès au dispositif de charge ;
- la détermination du deuxième paramètre de puissance sur la base de la première tension de sortie, de la deuxième tension de sortie et de la valeur de résistance, le deuxième paramètre de puissance représentant une variation de puissance provoquée par l'accès au dispositif de charge ; et
- la détermination du rapport de paramètres électriques de sortie sur la base de la deuxième tension de sortie et de la première tension de sortie.

3. Procédé selon la revendication 2, dans lequel ledit ajustement d'un état de connexion entre le panneau photovoltaïque (101) et le micro-onduleur (102) sur la base du paramètre de puissance de sortie et du rapport de paramètres électriques de sortie comprend :
- la commande au panneau photovoltaïque (101) d'accéder au micro-onduleur (102) pour fonctionner dans un cas dans lequel le paramètre de puissance de sortie et le rapport de paramètres électriques de sortie remplissent des conditions de paramètres prédéfinies et la première tension de sortie et la deuxième tension de sortie remplissent des conditions de sortie prédéfinies,
dans lequel le paramètre de puissance de sortie et le rapport de paramètres électriques de sortie remplissent des conditions de paramètres prédéfinies, comprenant :
- le fait que le premier paramètre de puissance remplit une première condition de paramètres, le fait que le deuxième paramètre de puissance remplit une deuxième condition de paramètres, et le fait que le rapport de paramètres électriques de sortie remplit une troisième condition de paramètres,
dans lequel le paramètre de puissance de sortie et le rapport de paramètres électriques de sortie remplissent des conditions de paramètres prédéfinies, comprenant au moins l'un parmi :
- le fait que le premier paramètre de puissance est supérieur ou égal à un premier seuil de puissance prédéfini ;
- le fait que le deuxième paramètre de puissance est inférieur ou égal à un deuxième seuil de puissance prédéfini ; et
- le fait que le rapport de paramètres électriques de sortie est supérieur ou égal à un seuil de rapport prédéfini.

4. Procédé selon l'une quelconque des revendications précédentes, avant ledit ajustement d'un état de connexion entre le panneau photovoltaïque (101) et le micro-onduleur (102) sur la base du paramètre de puissance de sortie et du rapport de paramètres électriques de sortie, comprenant en outre :
- l'obtention d'une consommation de puissance minimale de système et d'une consommation de puissance minimale de charge du système photovoltaïque, avec une tension en circuit ouvert et une tension de fonctionnement du panneau photovoltaïque (101) ;
- la détermination d'un premier seuil de puissance prédéfini sur la base de la consommation de puissance minimale de système et de la consommation de puissance minimale de charge ;
- la détermination d'un deuxième seuil de puissance prédéfini sur la base de la tension en circuit ouvert, le deuxième seuil de puissance prédéfini étant calculé en tant que : (k-k*0,5)^2/R1, où * représente une multiplication, ^ représente un carré, k représente la tension en circuit ouvert et R1 représente la valeur de résistance du dispositif de charge ; et
- la détermination d'un seuil de rapport prédéfini sur la base de la tension en circuit ouvert et de la tension de fonctionnement, le seuil de rapport prédéfini étant obtenu par la multiplication de la tension en circuit ouvert et de la tension de fonctionnement par un rapport correspondant.

5. Procédé selon la revendication 3, dans lequel :
- avant l'obtention d'une première tension de sortie du panneau photovoltaïque (101) dans un cas dans lequel le dispositif de commutation est ouvert, le procédé comprend en outre : l'obtention d'une tension d'extrémité de sortie du panneau photovoltaïque (101) ; la vérification d'un état de fonctionnement du dispositif de commutation dans un cas dans lequel la tension d'extrémité de sortie remplit des conditions de fonctionnement prédéfinies.

6. Procédé selon la revendication 3, dans lequel :
- ladite commande au panneau photovoltaïque (101) d'accéder au micro-onduleur (102) pour fonctionner comprend : la commande de l'activation de l'unité de commutation (801) qui est connectée séparément au panneau photovoltaïque (101) et au micro-onduleur (102), le micro-onduleur (102) étant configuré pour être connecté à un équipement électrique.

7. Procédé selon la revendication 3, dans lequel :
- avant l'obtention d'une première tension de sortie du panneau photovoltaïque (101) dans un cas dans lequel le dispositif de commutation est ouvert, le procédé comprend en outre : l'obtention d'une tension d'extrémité de sortie du panneau photovoltaïque (101) ; la vérification d'un état de fonctionnement du dispositif de commutation dans un cas dans lequel la tension d'extrémité de sortie remplit des conditions de fonctionnement prédéfinies ;
- ladite commande au panneau photovoltaïque (101) d'accéder au micro-onduleur (102) pour fonctionner comprend : la commande de l'activation de l'unité de commutation (801) qui est connectée séparément au panneau photovoltaïque (101) et au micro-onduleur (102), le micro-onduleur (102) étant configuré pour être connecté à un équipement électrique.

8. Procédé selon l'une quelconque des revendications 2 et 3, dans lequel le premier paramètre de puissance est obtenu en divisant un carré de la deuxième tension de sortie par la valeur de résistance.

9. Système photovoltaïque comprenant :
- un dispositif de charge ;
- un micro-onduleur (102) configuré pour être connecté à un équipement électrique ;
- un panneau photovoltaïque (101) dont une extrémité de sortie est connectée à une première extrémité du dispositif de charge et au micro-onduleur (102) ;
- un collecteur de tension (103) prévu au niveau de l'extrémité de sortie du panneau photovoltaïque (101) ;
- un dispositif de commutation dont une première extrémité est connectée à une deuxième extrémité du dispositif de charge et dont une deuxième extrémité est mise à la masse ; et
- un dispositif de commande connecté au collecteur de tension (103) et à une troisième extrémité du dispositif de commutation, adapté pour réaliser le procédé selon l'une quelconque des revendications précédentes.
